# EUROPÄISCHE PATENTSCHRIFT

(11) **EP 3 625 415 B1**
(45) Veröffentlichungstag und Bekanntmachung des Hinweises auf die Patenterteilung: **26.07.2023**
(21) Anmeldenummer: 17780229.5
(22) Anmeldetag: 15.05.2017
(51) Int. Cl.: E05D 15/26, E05D 15/40, E05F 1/10

(54) **KLAPPENLAGER MIT EINER EINSTELLHILFE**
FLAP BEARING WITH AN ADJUSTMENT AID
PALIER DE VOLET ÉQUIPÉ D'UN ACCESSOIRE DE RÉGLAGE

(43) Veröffentlichungstag der Anmeldung: 25.03.2020
(73) Patentinhaber: Samet Kalip Ve Madeni Esya San. Ve Tic. A.S., 34513 Esenyurt/Istanbul (TR)
(72) Erfinder: HIRTSIEFER, Artur, 53819 Neunkirchen-Seelscheid (DE)
(74) Vertreter: Herrmann, Jochen
(86) Internationale Anmeldenummer: PCT/TR2017/000057
(87) Internationale Veröffentlichungsnummer: WO 2018/212723

(56) Entgegenhaltungen:
- EP-A1- 2 857 620
- WO-A1-2006/039729
- DE-A1-102007 021 656

## Beschreibung

Die Erfindung betrifft ein Verfahren zur Einstellung eines Klappenlagers mit einem Schwenklager gegenüber einer Klappe, Faltklappe, Tür oder dergleichen eines Möbelstücks, wobei ein Montageträger des Klappenlagers an der Klappe, Faltklappe, Tür oder dergleichen befestigt ist, wobei ein Lagerteil des Klappenlagers das Schwenklager trägt und entlang eines Stellweges verschiebbar oder schwenkbar an dem Montageträger gelagert ist und wobei ein Steuerarm mit dem Schwenklager verbunden ist und eine schwenkbare Verbindung zwischen dem Klappenlager und einem an einem Möbelkorpus des Möbelstücks befestigten Klappenhalter herstellt.

Zum Verschließen insbesondere von Oberschränken sind Klappen und Faltklappen bekannt, die an einem Schrankdeckel oder an einer Schrankseitenwand angelenkt sind und zum Öffnen des Schrankes nach oben geschwenkt werden. Um ein leichtgängiges Öffnen und Schließen der Klappe oder Faltklappe zu ermöglichen werden Hebevorrichtungen vorgesehen. Diese weisen einen Klappenhalter mit einem Energiespeicher, zumeist in Form einer Feder oder eines Federpakets, auf, welcher an dem Möbelkorpus befestigt ist. An der Klappe oder Faltklappe ist ein Klappenlager montiert. Ein Steuerarm bildet eine gelenkige Verbindung zwischen dem Klappenhalter und dem Klappenlager. Er überträgt eine von dem Energiespeicher angetriebene Hebekraft von dem Klappenhalter auf das Klappenlager und damit die Klappe oder Faltklappe. Die Hebekraft ist in Öffnungsrichtung der Klappe oder Faltklappe ausgerichtet. Bei geeigneter Auslegung der Hebevorrichtung hält sie die Klappe oder Faltklappe in ihrer geöffneten Stellung und in den jeweiligen Zwischenstellungen. Um ein vollständiges Schließen der Klappe oder Faltklappe zu ermöglichen, muss die Position des Klappenlagers exakt auf die Montageposition des Klappenhalters und die Länge des Steuerarms eingestellt werden. Die Einstellung erfolgt dabei durch entsprechendes Verstellen der Position des Klappenlagers durch dazu vorgesehene Einstellmittel bei geöffneter Klappe oder Faltklappe. Die Position wird dann bei geschlossener Klappe oder Faltklappe überprüft und bei wieder geöffneter Klappe oder Faltklappe korrigiert. Dieser iterative Prozess ist aufwändig, insbesondere, wenn an beiden Seiten der Klappe oder Faltklappe eine Hebevorrichtung vorgesehen ist, deren Klappenlager jeweils separat eingestellt werden müssen, wobei die zur Überprüfung der Einstellung bewertete Schließposition der Klappe oder Faltklappe von beiden Hebevorrichtungen beeinflusst wird.

Aus der EP 2 857 620 A1 ist ein Klappenlager mit einem Schwenklager zur gelenkigen Ankopplung eines Steuerarms einer vorgespannten Hebevorrichtung an eine Klappe, Faltklappe, Tür oder dergleichen eines Möbelstücks bekannt. Ein Montageträger des Klappenlagers ist an der Klappe, Faltklappe, Tür oder dergleichen befestigbar. Ein Lagerteil des Klappenlagers trägt das Schwenklager und ist entlang eines Stellweges verschiebbar an dem Montageträger gelagert. Ein Positionierelement ist verschiebbar an dem Montageträger gelagert. Das Positionierelement ist fest an dem Lagerteil entlang des Stellwegs befestigt. Das Positionierelement ist aus einem Harz gefertigt, sodass ein Eingriffsbereich des Elements elastisch verformt werden kann. Während einer Einstellung des Klappenlagers wird das Lagerteil zusammen mit dem daran befestigten Positionierelement entlang eines Stellwegs relativ zu dem Montageträger in eine Stellrichtung verschoben. Das Verschieben des Lagerteils in einer entgegengesetzten Richtung wird durch sägezahnförmige Vorsprünge und Vertiefungen verhindert, die auf einander zugewandten Oberflächen des Eingriffsbereichs des Positionierelements und des Montageträgers ausgebildet sind.

Somit ist das Lagerteil in seiner Einstellposition durch das Positionierelement elastisch gehalten und kann in dieser Position mittels einer Schraube fixiert werden.

Aus der DE 10 2007 021 656 A1 ist ein Klappenhalter für eine schwenkbare Ankopplung einer Möbelklappe an einem Möbelkorpus bekannt. Der Klappenhalter weist ein Lagerelement auf, das an der Möbelklappe befestigt werden kann, sowie einen Stellhebel, der mittels einer Schwenkachse am Möbelkorpus befestigt werden kann. Ein Justierelement ist schwenkbar um eine Schwenkachse am Lagerelement und um eine weitere Schwenkachse am Schwenkarm gelagert. Zum Einstellen der Position der Möbelklappe bezüglich des Möbelkorpus kann die Winkellage des Justierelements um die Schwenkachse am Lagerelement eingestellt werden. Zur Fixierung des Justierelements in der gewünschten Lage ist eine Fixierschraube vorgesehen, die in einer kreissegmentförmigen Nut des Lagerelements geführt ist. WO 2006/039729 A1 offenbart ein Klappenlager mit einem Schwenklager zur gelenkigen Ankopplung eines Steuerarms einer vorgespannten Hebevorrichtung an eine Klappe, Faltklappe, Tür oder dergleichen eines Möbelstücks. Das Klappenlager ist Teil eines Lagerteils, das an einer unteren Teilklappe der Faltklappe entlang eines Stellweges verschiebbar gelagert ist. Um die relative Position des Lagerteils zu verstellen, ist ein Betätigungsorgan erforderlich, damit das Lagerteil bei geschlossener Faltklappe verstellt werden kann.

Eine Aufgabe der Erfindung besteht darin, ein Verfahren zur einfachen und schnellen Einstellung eines Klappenlagers einer Hebevorrichtung für eine Klappe, Faltklappe, Tür oder dergleichen bereitzustellen.

Die das Verfahren betreffende Aufgabe der Erfindung wird dadurch gelöst, dass ein Positionierelement vorgesehen ist, das beim Einstellvorgang des Klappenlagers als Einstellhilfe dient, welche die optimale Position des Lagerteils markiert, und verschiebbar oder schwenkbar an dem Montageträger gelagert ist, dass das Positionierelement in einem Stellbereich des Lagerteils entlang des Stellwegs des Lagerteils angeordnet ist, dass die Klappe, Faltklappe, Tür oder dergleichen geschlossen wird, wobei das Lagerteil an das Positionierelement anstößt und es in eine Einstellposition verstellt, dass die Klappe, Faltklappe, Tür oder dergleichen geöffnet wird, wobei das Positionierelement in seiner Position verbleibt, und dass der Stellweg des Lagerteils in Richtung einer von dem Klappenhalter auf das Lagerteil übertragenen Haltekraft derart gegenüber dem Montageträger eingestellt und begrenzt wird, dass das Lagerteil an dem Positionierelement anliegt. Das Lagerteil verstellt sich beim Schließen der Klappe, Faltklappe, Tür oder dergleichen in seine optimale Position. Dabei schleppt es das Positionierelement mit. Beim Öffnen der Klappe, Faltklappe, Tür oder dergleichen wird das Lagerteil durch die einwirkende Hebekraft wieder von seiner optimalen Position weg verstellt. Das Positionierelement verbleibt jedoch in seiner Position und kennzeichnet somit die optimale Lage des Lagerteils. Das Lagerteil kann jetzt bei geöffneter Klappe, Faltklappe, Tür oder dergleichen und damit leicht zugängig in seine korrekte Position eingestellt werden. Durch das erfindungsgemäße Verfahren kann somit das Klappenlager nach einmaligem Schließen der Klappe, Faltklappe, Tür oder dergleichen korrekt eingestellt werden. Ein iterativer und damit zeitaufwändiger Einstellvorgang, der ein mehrfaches Einstellen und anschließendes Überprüfen der Einstellung des Klappenlagers bei geschlossener Klappe, Faltklappe, Tür oder dergleichen erfordert, kann vermieden werden.

Besonders bevorzugt kann es vorgesehen sein, dass ein in seiner Länge in vorgegebenen Rastschritten einstellbarer Steuerarm verwendet ist, dass in einem ersten Verfahrensschritt die Klappe, Faltklappe, Tür oder dergleichen geschlossen wird, wobei sich eine Länge des Steuerarms einstellt, dass die Klappe, Faltklappe, Tür oder dergleichen geöffnet wird, dass der Steuerarm in seiner eingestellten Raststellung verbleibt oder bei nicht eingerasteter Rastverbindung in seiner nächst kürzeren Raststellung eingerastet wird, dass die Länge des Steuerarms durch eine Feststelleinrichtung fixiert wird, dass das Positionierelement an das Lagerteil herangeschoben wird, dass die Klappe, Faltklappe, Tür oder dergleichen ein weiteres Mal geschlossen wird, wobei das Lagerteil an das Positionierelement anstößt und es in eine Einstellposition verstellt, dass die Klappe, Faltklappe, Tür oder dergleichen geöffnet wird, wobei das Positionierelement in seiner Position verbleibt, und dass der Stellweg des Lagerteils in Richtung einer von dem Klappenhalter auf das Lagerteil übertragenen Haltekraft derart gegenüber dem Montageträger eingestellt und begrenzt wird, dass das Lagerteil an dem Positionierelement anliegt. Durch Verwendung des in seiner Länge einstellbaren Steuerarms kann die Hebevorrichtung einfach an verschieden große Möbelstücke bzw. Klappen, Faltklappe, Türen oder dergleichen angepasst werden. Dabei ermöglicht das Verfahren eine schnelle Ermittlung und Einstellung sowohl der geeigneten Länge des Steuerarms als auch der Position des Klappenlagers. Dadurch wird die erforderliche Dauer zur Einstellung der Hebevorrichtung deutlich reduziert. Gleichzeitig kann die Hebevorrichtung so eingestellt werden, dass die Klappe, Faltklappe, Tür oder dergleichen vollständig schließt.

Eine leichtgängige Verschiebung des Positionierelements durch das Lagerteil wird dadurch erreicht, dass die Stellrichtungen des Positionierelements und des Lagerteils gleich ausgerichtet sind.

Um ein Verstellen des Positionierelements beim Öffnen der Klappe, Faltklappe, Tür oder dergleichen zu vermeiden ist es vorgesehen, dass das Positionierelement derart an dem Montageträger gelagert ist, dass es ohne äußere, über einem vorgegebenen Schwellwert liegende Krafteinwirkung in seiner jeweiligen Position gegenüber dem Montageträger gehalten ist. Dazu kann beispielsweise eine ausreichend große Reibung zwischen dem Positionierelement und dem Montageträger ausgebildet sein.

Der Steuerarm überträgt eine Hebekraft auf die Klappe, Faltklappe, Tür oder dergleichen, die, ggf. abgesehen von einem letzten Verstellweg beim Schließen der Klappe, Faltklappe, Tür oder dergleichen, entgegen der wirkenden Schwerkraft auf die Klappe, Faltklappe, Tür oder dergleichen einwirkt. Bei geöffneter oder teilgeöffneter Klappe, Faltklappe, Tür oder dergleichen wird das Lagerteil somit entlang seines zulässigen Stellbereichs in Richtung der wirkenden Hebekraft verstellt. Um den Stellbereich des Lagerteils entlang seines möglichen Stellwegs zu begrenzen, ist vorgesehen, dass an dem Montageträger ein Anschlag angeordnet ist, der den Stellweg des Lagerteils in Richtung einer von der Hebevorrichtung auf das Klappenlager übertragenen Hebekraft begrenzt, und dass an dem Lagerteil ein Einstellmittel, insbesondere eine Einstellschraube, angeordnet ist, mit welcher der Stellbereich des Lagerteils in Richtung zum Anschlag einstellbar ist. Der Anschlag definiert somit zunächst die Endposition, in welche das Lagerteil in Richtung der wirkenden Hebekraft verschoben werden kann. Durch das Einstellmittel kann diese Endposition entgegen der wirkenden Hebekraft und damit weg von dem Anschlag verstellt werden. Durch die wirkende Hebekraft wird das Lagerteil bei geöffneter oder teilgeöffneter Klappe, Faltklappe, Tür oder dergleichen in dieser eingestellten Endposition gehalten. Damit kann durch die einseitige Begrenzung des Stellbereichs des Lagerteils dessen Position gegenüber dem Montageträger und damit gegenüber der Klappe, Faltklappe, Tür oder dergleichen eingestellt werden.

Ein einfacher konstruktiver Aufbau des Klappenlagers, der eine einfache Lagerung sowohl des Lagerteils als auch des Positionierelements ermöglicht, kann dadurch erreicht werden, dass der Montageträger eine Führung aufweist, und dass das Lagerteil und das Positionierelement auf der Führung gelagert sind.

Vorteilhaft kann es vorgesehen sein, dass das Lagerteil und/oder das Positionierelement auf einer linearen Bahn oder einer gekrümmten Bahn oder einer Kreisbahn geführt sind. Eine lineare Bahn ermöglicht eine leichtgängige Verschiebung des Lagerteils und des Positionierelements. Durch eine gekrümmte Bahn kann der Raumbedarf reduziert werden. Sowohl die lineare als auch die gekrümmte Bahn kann beispielsweise durch Führung des Lagerteils und/oder des Positionierelements auf entsprechend geformten Führungsschienen oder Kulissenführungen vorgegeben sein. Eine Kreisbahn ermöglicht eine Schwenklagerung des Lagerteils und des Positionierelements.

Beim Schließen der Klappe, Faltklappe, Tür oder dergleichen wird das nicht korrekt eingestellte Lagerteil durch die geometrische Anordnung des Steuerarms entgegengesetzt zu der Hebekraft in seine korrekte Position verstellt. Um diese Position zu kennzeichnen kann es vorgesehen sein, dass das Positionierelement entgegengesetzt zu der Richtung der von der Hebevorrichtung auf das Klappenlager übertragenen Hebekraft in den Stellbereich des Lagerteils entlang des Stellwegs angeordnet ist. Das Positionierelement wird so beim Schließen der Klappe, Faltklappe, Tür oder dergleichen von dem Lagerteil mitgeschleppt.

Um bei einer großen Abweichung der Länge des Steuerarms von einer geeigneten Länge zu vermeiden, dass das Positionierelement und/oder das Lagerteil beim Schließen der Klappe, Faltklappe, Tür oder dergleichen von dem Montageträger gleitet, kann es vorgesehen sein, dass der Stellbereich des Positionierelements entgegengesetzt zu der Richtung der von der Hebevorrichtung auf das Klappenlager übertragenen Hebekraft durch eine Rastverbindung zwischen dem Positionierelement und dem Montageträger begrenzt ist. Bei zu langem Steuerarm wird die Verstellung des Positionierelements und des daran anliegenden Lagerteils beim Schließen der Klappe, Faltklappe, Tür oder dergleichen durch die Rastverbindung begrenzt. Es muss dann zunächst die Länge des Steuerarms, die Position des Klappenhalters oder die Position des Montageträgers verändert werden, bis der mögliche Stellbereich des Lagerteils ausreicht, um dieses korrekt zu positionieren. Durch Lösen der Rastverbindung können das Positionierelement und das Lagerteil von dem Montageträger abgenommen werden. Entsprechend kann zur Montage des Klappenlagers zunächst der Montageträger an der Klappe, Faltklappe, Tür oder dergleichen befestigt werden, dass Lagerteil mit dem Montageträger verbunden werden und anschließend das Positionierelement mit dem Montageträger verbunden und durch die Rastverbindung gesichert werden.

Entsprechend einer bevorzugten Ausgestaltungsvariante der Erfindung kann es vorgesehen sein, dass die Länge des Steuerarms in vorgegebenen Rastschritten einstellbar ist. Es kann somit zunächst die Länge des Steuerarms im Rahmen der durch die Rastschritte vorgegebenen Abstände eingestellt werden. Dies kann durch Schließen der Klappe, Faltklappe, Tür oder dergleichen erfolgen, bei dem sich die Länge des Steuerarms im Rahmen der durch die Rasterung vorgegebenen Einstellmöglichkeiten bestmöglich einstellt. Während dieses ersten Schließens oder eines weiteren Schließens der Klappe, Faltklappe, Tür oder dergleichen wird die exakte Position des Lagerteils des Klappenlagers mit Hilfe des Positionierelements, wie zuvor beschrieben, ermittelt und nachfolgend bei geöffneter Klappe, Faltklappe, Tür oder dergleichen eingestellt. Durch das erfindungsgemäße Klappenlager kann somit die durch die Rasterung bedingte Ungenauigkeit der Längeneinstellung des Steuerarms einfach und schnell ausgeglichen werden.

Vorteilhaft kann es vorgesehen sein, dass die Länge des Steuerarms durch eine Feststelleinrichtung fixierbar ist. Die korrekte Länge des Steuerarms wird somit bei geöffneter Feststelleinrichtung durch Schließen der Klappe, Faltklappe, Tür oder dergleichen ermittelt und anschließend bei geöffneter Klappe, Faltklappe, Tür oder dergleichen mit Hilfe der Feststelleinrichtung fixiert. Damit kann sich die Länge des Steuerarms beim Betrieb der Hebevorrichtung nicht unbeabsichtigt verändern.

Ein ausreichend großer Stellbereich des Lagerteils des Klappenlagers kann dadurch sichergestellt werden, dass aufeinanderfolgende Raststellungen des Steuerarms in jeweils dem gleichen Rastabstand zueinander angeordnet sind und dass der maximale Stellweg des Lagerteils und/oder des Positionierelements größer oder gleich dem Rastabstand ist.

Die Erfindung wird im Folgenden anhand eines in den Zeichnungen dargestellten Ausführungsbeispiels näher erläutert. Es zeigen:
- Figur 1: in einer Seitenansicht eine Hebevorrichtung für eine Faltklappe eines Möbelstücks,
- Figur 2: in einer perspektivischen Explosionsdarstellung ein Klappenlager,
- Figur 3: in einer perspektivischen Darstellung einen Montageträger des in Figur 2 gezeigten Klappenlagers,
- Figur 4: in einer perspektivischen Darstellung den in Figur 3 gezeigten Montageträger mit einem aufgeschobenen Lagerteil,
- Figur 5: in einer perspektivischen Darstellung das montierte Klappenlager mit einem teilmontierten Steuerarm,
- Figur 6: in einer perspektivischen Darstellung das in Figur 2 gezeigte Klappenlager bei beabstandet zueinander angeordnetem Lagerteil und Positionierelement,
- Figur 7: das in Figur 6 gezeigte Klappenlager in einer seitlichen, perspektivischen Schnittdarstellung,
- Figur 8: in einer Seitenansicht das in Figur 5 gezeigte, montierte Klappenlager während eines ersten Verfahrensschritts zur Einstellung des Klappenlagers,
- Figur 9: in einer perspektivischen Seitendarstellung das in Figur 8 gezeigt Klappenlager während eines zweiten Verfahrensschritts zur Einstellung des Klappenlagers und
- Figur 10: in einer perspektivischen Seitendarstellung das in Figur 9 gezeigt Klappenlager nach Abschluss der Einstellung.

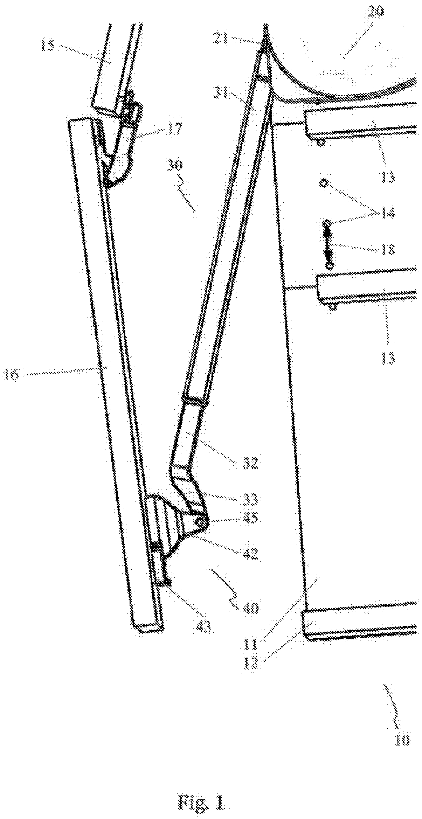

Figur 1 zeigt in einer Seitenansicht eine Hebevorrichtung für eine Faltklappe eines Möbelstücks 10. Das Möbelstück 10 ist vorliegend als Hängeschrank ausgebildet. In dem dargestellten Ausschnitt weist der Möbelkorpus eine Seitenwand 11 und einen Schrankboden 12 auf. Der Innenraum des Möbelstücks 10 ist durch Regalbretter 13 unterteilt. Dazu sind in die Seitenwand 11 und in eine nicht gezeigte, der Seitenwand 11 gegenüberliegend angeordnete zweite Seitenwand des Möbelstücks 10 Wandbohrungen 14 eingebracht. In diese sind nicht dargestellt Halteelemente eingesetzt, auf denen die Regalbretter 13 aufliegen. Die Wandbohrungen 14 sind untereinander jeweils durch einen fest vorgegebenen Bohrungsabstand 18 zueinander beabstandet. Der Bohrungsabstand 18 ist standardisiert und beträgt vorliegend 32 mm.

Das Möbelstück 10 kann durch die vorliegend teilgeöffnet dargestellte Faltklappe verschlossen werden. Die Faltklappe ist durch eine erste und eine zweite Teilklappe 15, 16 gebildet. Dabei sind die beiden Teilklappen 15, 16 durch ein Mittenscharnier 17 miteinander verbunden. Die erste Teilklappe 15 ist nicht dargestellt mit einem Möbelscharnier gelenkig an dem Möbelkorpus und dort an einem Schrankdeckel des Möbelstücks 10 befestigt. Es ist jedoch auch denkbar, eine einflügelige Klappe vorzusehen.

Die Hebevorrichtung unterstützt den Öffnung- und Schließvorgang der Faltklappe. Sie ist vorliegend dazu ausgebildet, die Faltklappe auch in einem teilgeöffneten Zustand in ihrer Position zu halten. Dazu weist sie einen Klappenhalter 20 auf, der an der Seitenwand 11 des Möbelstücks 10 befestigt ist. Der Klappenhalter 20 ist zumindest an einer der Wandbohrungen 14 festgelegt. Die Montageposition des Klappenhalters 20 kann in Abhängigkeit von der Größe des Möbelstücks 10 und der Faltklappe gewählt werden. Dabei sind die möglichen Montagepositionen durch die Lage der Wandbohrungen 14 vorgegeben. Ein Gehäuse des Klappenhalters 20 ist durch einen Deckel abgedeckt. Ein Halteansatz 21 ist aus dem Gehäuse herausgeführt. Der Halteansatz 21 ist Teil eines schwenkbar an dem Klappenhalter 20 gelagerten Hebels. Ein Steuerarm 30 der Hebevorrichtung ist mit seinem einen Ende mit dem Halteansatz 21 verbunden. In dem Gehäuse des Klappenhalters 20 ist ein nicht dargestellter Energiespeicher, vorliegend in Form eines Federpakets, angeordnet, welches mit dem Hebel mittelbar verbunden ist. Der Halteansatz 21 überträgt die Federkraft auf den Steuerarm 30, wobei die Federkraft in Richtung einer Öffnungsbewegung der Faltklappe wirkt.

Der Steuerarm 30 weist in dem gezeigten Ausführungsbeispiel einen ersten und einen zweiten Teleskoparm 31, 32 auf. Dabei bildet der erste Teleskoparm 31 einen äußeren Teleskoparm, in dem der zweite Teleskoparm 32 als innerer Teleskoparm linear verstellbar gelagert ist. Durch eine entsprechende Verschiebung des zweiten Teleskoparms 32 gegenüber dem ersten Teleskoparm 31 kann die Länge des Steuerarms 30 verändert und mit Hilfe einer nicht gezeigten Feststelleinrichtung fixiert werden. Es ist jedoch auch denkbar, einen nicht in seiner Länge einstellbaren Steuerarm zu verwenden. An seinem einem Klappenlager 40 zugewandten Ende weist der zweite Teleskoparm 32 einen Halteabschnitt 33 auf. Der Halteabschnitt 33 ist gebogen geformt. Endseitig ist der Halteabschnitt 33 über ein Schwenklager 45 schwenkbar mit dem Klappenlager 40 verbunden. Das Klappenlager 40 ist an der inneren Oberfläche der zweiten Teilklappe 16 befestigt. Es weist ein Lagerteil 42 und ein Positionierelement 43 auf.

Zum Öffnen und Schließen des Möbelstücks 10 wird die erste Teilklappe 15 der Faltklappe um das nicht gezeigte Möbelscharnier am oberen Rand des Möbelstücks geschwenkt. Dabei ist die zweite Teilklappe 16 durch das Mittenscharnier 17 und die Hebevorrichtung geführt. Die Hebevorrichtung überträgt die in Öffnungsrichtung der Faltklappe wirkende Kraft von dem Klappenhalter 20 über den Steuerarm 30 und das Klappenlager 40 auf die Faltklappe. Die beiden Teilklappen 15, 16 werden in einer Faltbewegung derart um das Mittenscharnier 17 geschwenkt, bis sie in einem spitzen Winkel zueinander ausgerichtet und von der Hebevorrichtung gestützt im oberen Bereich des Möbelstücks 10 gehalten sind.

Im geschlossenen Zustand liegen die beiden Teilklappen 15, 16 in einer Ebene an dem Möbelkorpus an. Der Steuerarm 30 ist dann im Inneren des Möbelstücks 10 angeordnet und verläuft seitlich der Faltklappe. Durch die gebogene Form des Halteabschnitts 33 ist der Steuerarm 30 zu dem Schwenklager 45 an dem bei geschlossener Faltklappe in den Möbelkorpus hineinragenden Klappenlager 40 geführt.

Der geschlossene Zustand der Faltklappe definiert den erforderlichen Abstand zwischen den Drehpunkten des Steuerarms 30 am Schwenklager 45 und am Klappenhalter 20. Bei zu großem oder zu kurzem Abstand kann die Faltklappe nicht vollständig an dem Möbelkorpus anliegend geschlossen werden. Um insbesondere bei Verwendung eines nicht in seiner Länge einstellbaren oder in vorgegebenen Raststufen in seiner Länge diskontinuierlich einstellbaren Steuerarms 30 eine exakte Einstellung des Abstandes zwischen den Drehpunkten des Steuerarms 30 und damit ein vollständiges Schließen der Faltklappe zur ermöglichen, kann die Position des Schwenklagers 45 gegenüber der zweiten Teilklappe 16 eingestellt werden. Dazu ist das Lagerteil 42, welches das Schwenklager 45 trägt, beweglich gelagert. Es weist einen Verstellmechanismus auf, mit dem seine Position eingestellt werden kann. Der Verstellmechanismus ist jedoch nur bei geöffneter Faltklappe zugängig. Um auch bei geöffneter Faltklappe eine einfache und schnelle Einstellung der Position des Klappenlagers 40 zu ermöglichen, ohne diese durch wiederholtes Schließen der Faltklappe zu überprüfen, weist das Klappenlager 40 das Positionierelement 43 auf.

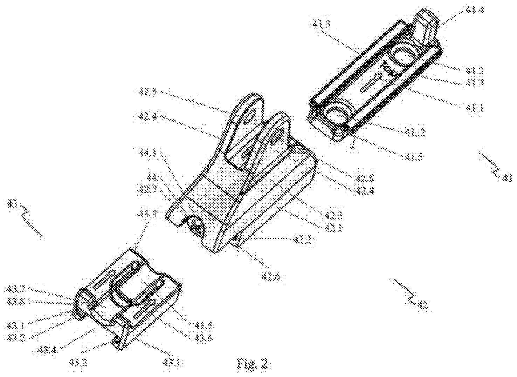

Figur 2 zeigt in einer perspektivischen Explosionsdarstellung das Klappenlager 40. Dabei sind fluchtend zueinander ein Montageträger 41, das Lagerteil 42 und das Positionierelement 43 angeordnet. Der Montageträger 41 des Klappenlagers 40 weist eine Grundplatte 41.1 auf. In die Grundplatte 41.1 sind beabstandet zueinander zwei Montagebohrungen 41.2 eingebracht. Die Montagebohrungen 41.2 dienen der Befestigung des Montageträgers 41 an einem Möbelteil, vorliegend an der zweiten Teilklappe 16 der in Figur 1 gezeigten Faltklappe. Der Montageträger 41 weist eine langgezogene, rechteckige Grundform auf. Seitlich der Grundplatte 41.1 sind zwei Führungen 41.3 an diese angeformt. Die Führungen 41.3 sind in Richtung der Längserstreckung des Montageträgers 41 ausgerichtet. Sie sind in Form zweier beabstandet zueinander angeordneter und parallel verlaufender Führungsschienen ausgebildet. Die Führungen 41.3 sind entlang ihrer Längserstreckung in Richtung zu dem Lagerteil 42 ausgerichtet. Sie verlaufen geradlinig. An dem dem Lagerteil 42 abgewandten Ende des Montageträgers 41 ist ein Anschlag 41.4 an die Grundplatte 41.1 angeformt. Der Anschlag 41.4 steht über die durch die Führungen 41.3 gebildete Ebene über. Gegenüberliegend zu dem Anschlag 41.4 ist eine Rastkante 41.5 an die Grundplatte 41.1 des Montageträgers 41 angeformt.

Das Lagerteil 42 weist ein Basisteil 42.3 auf. An das Basisteil 42.3 sind zwei beabstandet zueinander angeordnete Lagerschenkel 42.4 angeformt. In die Lagerschenkel 42.4 ist jeweils eine Achsbohrung 42.5 eingeformt. Die Achsbohrungen 42.5 in den gegenüberliegenden Lagerschenkeln 42.4 sind fluchtend zueinander ausgerichtet. Gegenüberliegend zu den Lagerschenkel 42.4 ist ein Führungsabschnitt 42.1 an das Basisteil 42.3 angeformt. Der Führungsabschnitt 42.1 bildet zwei gegenüberliegend und beabstandet zueinander angeordnete Führungsnuten 42.2 aus. Die Führungsnuten 42.2 verlaufen geradlinig. Sie sind entlang ihrer Längserstreckung in Richtung zu den Führungen 41.3 des Montageträgers 41 ausgerichtet. Die Führungsnuten 42.2 und die Führungen 41.3 sind derart aufeinander abgestimmt, dass das Lagerteil 42 mit seinem Führungsabschnitt 42.1 auf dem Montageträger 41 aufgeschoben werden kann. Die Führungen 41.3 des Montageträgers 41 und die Führungsnuten 42.2 des Lagerteils 42 bilden dabei eine Linearführung aus. Das Lagerteil 42 kann entlang dieser Linearführung gegenüber dem Montageträger 41 verschoben werden. Durch die Führungen 41.3 und die Führungsnuten 42.2 ist somit ein Stellweg des Klappenlagers 40 vorgegeben. Der Stellweg gibt die beiden möglichen Verstellrichtungen des Lagerteils 42 gegenüber dem Montageträger 41 vor. Dabei wird der Stellweg durch den Anschlag 41.4 begrenzt. Gegenüberliegend zu dem Montageträger 41 ist der Führungsabschnitt 42.1 des Lagerteils 42 gegenüber dem angrenzenden Basisteil 42.3 verkürzt ausgebildet. Das Basisteil 42.3 steht somit auf seiner dem Positionierelement 43 zugewandten Seite gegenüber dem Führungsabschnitt 42.1 über. Dadurch ist in Verlängerung des Führungsabschnitts 42.1 und überdeckt von dem Überstand des Basisteils 42.3 ein Aufnahmebereich für das Positionierelement 43 ausgebildet. Dem Positionierelement 43 zugewandt ist der Führungsabschnitt 42.1 von einer ersten Anlagefläche 42.6 abgeschlossen. In dem Basisteil 42.3 des Lagerteils 42 ist eine Einstellschraube 44 angeordnet. In der gewählten Ansicht ist von der Einstellschraube 44 lediglich der Schraubenkopf 44.1 mit einer Werkzeugaufnahme, vorliegend einem Kreuzschlitz, zu erkennen. Eine in das Basisteil eingeformte Werkzeugaufnahme 42.7 ermöglicht einen Zugriff auf die Einstellschraube 44.

Das Positionierelement 43 weist einen Führungsbereich 43.1 auf, der zwei beabstandet zueinander gegenüberliegende Nuten 43.2 ausbildet. Die Nuten 43.2 sind in Richtung der Führungsnuten 42.2 des Lagerteils 42 und damit der Führungen 41.3 des Montageträgers 41 ausgerichtet. Der Führungsbereich 43.1 ist an einen Grundkörper 43.8 des Positionierelements 43 angeformt. Der Grundkörper 43.8 und der Führungsbereich 43.1 umgreifen eine Montageträgeraufnahme 43.4. Gegenüberliegend zu der Montageträgeraufnahme 43.4 ist eine kehlförmig ausgebildete Werkzeugführung 43.7 in das Positionierelement 43 eingeformt. Die Werkzeugführung 43.7 ist zu dem Lagerteil 42 hin ausgerichtet. Entlang der Werkzeugführung 43.7 ist eine Rastlasche 43.5 mit dem Positionierelement 43 verbunden. Die Rastlasche 43.5 bildet endseitig eine in die Montageträgeraufnahme 43.4 hineinragende Rastnase 43.6 aus. Dem Lagerteil 42 zugewandt ist das Positionierelement 43 von einer zweiten Anlagefläche 43.3 abgeschlossen. Der Führungsbereich 43.1 des Positionierelements 43 ist derart ausgebildet, dass er mit seinen Nuten 43.2 auf die Führungen 41.3 des Montageträgers 41 aufgeschoben und entlang dieser verstellt werden kann.

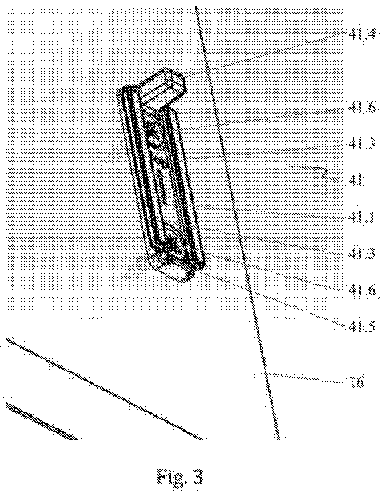

Figur 3 zeigt in einer perspektivischen Darstellung den Montageträger 41 des in Figur 2 gezeigten Klappenlagers 40. Der Montageträger 41 ist mittels zweier Montageschrauben 41.6, welche durch die Montagebohrungen 41.2 in der Grundplatte 41.1 geführt sind, mit der zweiten Teilklappe 16 der Faltklappe verbunden.

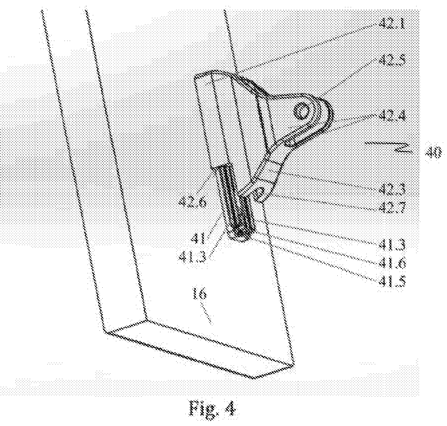

Figur 4 zeigt in einer perspektivischen Darstellung den in Figur 3 gezeigten Montageträger 41 mit dem aufgeschobenen Lagerteil 42. Das Lagerteil 42 ist so weit auf die Führungen 41.3 des Montageträgers 41 aufgeschoben, dass es endseitig an dem durch das Lagerteil 42 verdeckt angeordneten Anschlag 41.4 des Montageträgers 41 anliegt. Der Stellbereich des Lagerteils 42 entlang des durch die Führungen 41.3 und die Führungsnuten 42.2 gebildeten Stellwegs ist somit durch den Anschlag 41.4 begrenzt. Zu seiner dem Führungsabschnitt 42.1 abgewandten Seite hin verjüngt sich das Basisteil 42.3 des Lagerteils 42 in Richtung der Längserstreckung des Montageträgers 41. Die Lagerschenkel 42.4 verjüngen sich, ausgehend von dem Basisteil 42.3, zu ihrem Abschluss hin weiter. Die Achsbohrungen 42.5 sind somit in einem in Verstellrichtung des Lagerteils 42 schmal ausgebildeten Endbereich der Lagerschenkel 42.4 angeordnet.

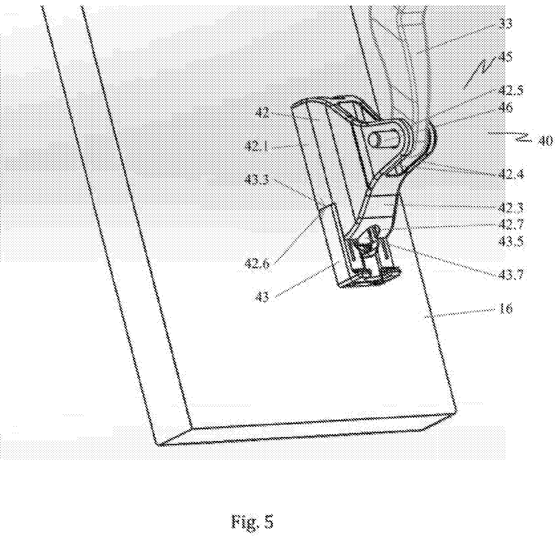

Figur 5 zeigt in einer perspektivischen Darstellung das an der zweiten Teilklappe 16 der Faltklappe montierte Klappenlager 40 mit einem teilmontierten Steuerarm 30. Das Lagerteil 42 und das Positionierelement 43 sind auf den Montageträger 41 aufgeschoben. Dabei liegt das Lagerteil 42 an dem verdeckt angeordneten Anschlag 41.4 an. Das Positionierelement 43 ist soweit auf die Führungen 41.3 des Montageträgers 41 aufgeschoben, dass mit seiner zweiten Anlagefläche 43.3 an der ersten Anlagefläche 42.6 des Führungsabschnittes 42.1 des Lagerteils 42 anliegt. Es ist so teilweise in dem von dem Überstand des Basisteils 42.3 gegenüber dem Führungsabschnitt 42.1 gebildeten Aufnahmebereich des Lagerteils 42 angeordnet. Die Werkzeugführung 43.7 des Positionierelements 43 und die Werkzeugaufnahme 42.7 des Lagerteils 42 sind derart einander zugeordnet, dass sie einen Zugang zu der in Figur 2 gezeigten Einstellschraube 44 freigeben. Die Rastlasche 43.5 ist soweit in dem Bereich des verdeckt angeordneten Montageträgers 41 angeordnet, dass die endseitig an der Rastlasche 43.5 angeformte, durch die Rastlasche 43.5 verdeckte Rastnase 43.6 in dem Bereich zwischen den beiden Führungen 41.3 des Montageträgers 41 angeordnet ist. Beim Verschieben des Positionierelements 43 weg von dem Lagerteil 42 stößt die Rastnase 43.6 an die in den Figuren 2 und 3 gezeigte Rastkante 41.5 des Montageträgers 41 an. Der Stellbereich des Positionierelements 43 ist somit durch die Rastnase 43.6 und die Rastkante 41.5 begrenzt.

Der Steuerarm 30 ist derart gegenüber dem Klappenlager 40 ausgerichtet, dass ein endseitig in seinen Halteabschnitt 33 eingebrachter Achsdurchbruch zu den Achsbohrungen 42.5 des Lagerteils 42 fluchtet. Ein Achsbolzen 46 kann so durch die Achsbohrungen 42.5 und den Achsdurchbruch geführt werden, wodurch das Schwenklager 45 ausgebildet ist.

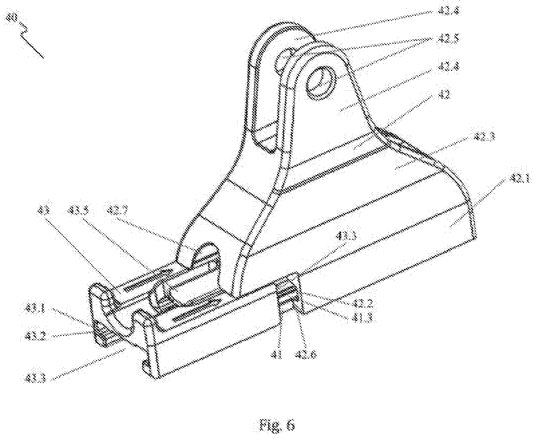

Figur 6 zeigt in einer perspektivischen Darstellung das in Figur 2 gezeigte Klappenlager 40 bei beabstandet zueinander angeordnetem Lagerteil 42 und Positionierelement 43. Das Lagerelement 42 ist mit seinen Führungsnuten 42.2 auf die Führungen 41.3 des Montageträgers 41 aufgeschoben. Entsprechend ist das Positionierelement 43 mit seinen Nuten 43.2 auf den Führungen 41.3 geführt. Das Lagerelement 42 und das Positionierelement 43 können unabhängig voneinander entlang des durch die Führungen 41.3 vorgegebenen Stellwegs verschoben werden. Dabei ist der Stellbereich des Positionierelements 43 durch den Eingriff der Rastnase 43.6 seiner Rastlasche 43.5 an der Rastkante 41.5 des Montageträgers 41 und gegenüberliegend durch das Lagerteil 42 begrenzt, wenn dieses in seiner Endposition an dem Anschlag 41.4 des Montageträgers 41 anliegt. Umgekehrt ist der Stellbereich des Lagerteils 42 durch den Anschlag 41.4 und durch das Positionierelement 43 begrenzt, wenn dieses in seiner durch die Rastnase 43.6 und die Rastkante 41.5 vorgegebenen Endposition steht. Zwischen den beiden durch den Anschlag 41.4 und die Rastkante 41.5 definierten Endpositionen können das Lagerteil 42 das Positionierelement 43 gemeinsam verschoben werden. Dabei können sie mit der ersten und der zweiten Anlagefläche 42.6, 43.3 aneinander stoßen und sich so gegenseitig mitschleppen.

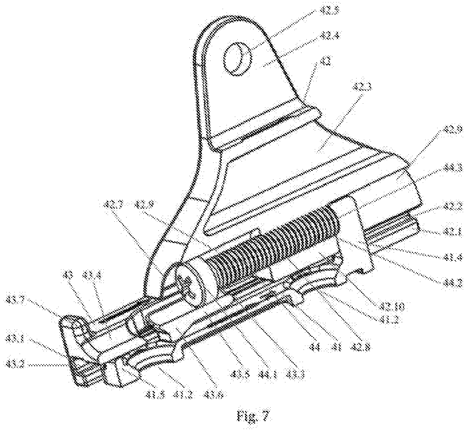

Figur 7 zeigt das in Figur 6 gezeigte Klappenlager 40 in einer seitlichen, perspektivischen Schnittdarstellung. Das Lagerteil 42 und das Positionierelement 43 sind auf dem Montageträger 41 geführt. Der Führungsabschnitt 42.1 des Lagerteils 42 weist zwei Seitenteile auf, die beabstandet zueinander und gegenüberliegend an dem Montageträger 41 vorbeigeführt sind. In der gewählten Schnittdarstellung ist nur ein Seitenteil zu sehen. Die Führungsnuten 42.2 sind an die Seitenteile angeformt. Zwischen den Seitenteilen ist ein Aufnahmebereich 42.9 ausgebildet. An die Seitenteile und das Basisteil 42.3 ist ein Ansatz 42.10 angeformt. Der Ansatz 42.10 ragt in den Aufnahmebereich 42.9 zwischen den beiden Seitenteilen des Führungsabschnitts 42.1. Auf seiner dem Basisteil 42.3 abgewandten Seite schließt der Ansatz 42.10 vor den Führungsnuten 42.2 ab. In den Ansatz 42.10 ist eine Gewindebohrung 42.8 eingebracht. Die Gewindebohrung 42.8 ist in Richtung der Stellbewegung des Lagerteils 42 gegenüber dem Montageträger 41 ausgerichtet. In die Gewindebohrung 42.8 ist die Einstellschraube 44 mit einem Gewinde 44.2 eingeschraubt. Ihr Schraubenkopf 44.1 weist in Richtung zum Positionierelement 43, während ein Schraubenende 44.3 zu dem Anschlag 41.4 des Montageträgers 41 hin ausgerichtet ist. Der Anschlag 41.4 ist in dem dem Positionierelement 43 abgewandten Abschnitt des Aufnahmebereichs 42.9 angeordnet. Der Schraubenkopf 44.1 der Einstellschraube 44 ist gegenüberliegend in dem dem Positionierelement 43 zugewandten Abschnitt des Aufnahmebereichs 42.9 positioniert. Der Schraubenkopf 44.1 ist damit der Werkzeugaufnahme 42.7 des Lagerteils 42 und der Werkzeugführung 43.7 des Positionierelements 43 zugewandt und somit von außen zugängig.

Die Grundplatte 41.1 des Montageträgers 41 mit den angeformten Führungen 41.3 ist je nach Stellung des Lagerteils 42 zu dem Montageträger 41 teilweise in dem Aufnahmebereich 42.9 angeordnet.

In der dargestellten Einstellung der Einstellschraube 44 ist diese so weit aus der Gewindebohrung 42.8 des Lagerteils 42 herausgedreht, dass ihr Schraubenende 44.3 nicht endseitig aus dem Ansatz 42.10 herausragt. Das Lagerteil 42 ist so weit auf den Montageträger 41 aufgeschoben, dass es mit seinem Ansatz 42.10 an dem Anschlag 41.4 des Montageträgers 41 anliegt. Der Stellbereich des Lagerteils 42 ist somit durch die Anlage des Ansatzes 42.10 an den Anschlag 41.4 begrenzt. Dies stellt den maximal möglichen Stellbereich des Lagerteils 42 in Richtung zum Anschlag 41.4 dar. Durch Eindrehen der Einstellschraube 44 in den Ansatz 42.10 stößt sich diese mit ihrem Schraubenende 44.3 an dem Anschlag 41.4 ab. Dadurch wird das Lagerelement 42 entlang des durch die Führungen 41.3 vorgegebenen Stellweges von dem Anschlag 41.4 weg- und auf das Positionierelement 43 zubewegt. Der Stellweg des Stellteils 42 kann so in die dem Positionierelement 43 abgewandte Richtung durch die Einstellschraube 44 begrenzt werden.

Das Positionierelement 43 ist mit seinen Nuten 43.2 auf die Führungen 41.3 des Montageträgers 41 aufgeschoben. Dabei ist seine Rastnase 43.6 in dem Bereich zwischen den Führungen 41.3 des Montageträgers 41 geführt. In die dem Lagerteil 42 abgewandte Richtung ist die Rastnase 43.6 auf der Höhe der Rastkante 41.5 des Montageträgers 41 angeordnet. Der Stellbereich des Positionierelements 43 weg von dem Lagerteil 42 ist somit durch die Anlage der Rastnase 43.6 an der Rastkante 41.5 begrenzt.

Zur Montage des Klappenlagers 40 an einer Klappe, Faltklappe, Tür oder dergleichen wird zunächst der Montageträger 41 mit den in Figur 3 gezeigten Montageschrauben 41.6 an die Klappe, Faltklappe, Tür oder dergleichen angeschraubt. Danach werden das Lagerteil 42 und anschließend das Positionierelement 43 auf dem Montageträger 41 aufgeschoben. Die Rastnase 43.6 bildet in Richtung der Aufschiebebewegung des Positionierelements 43 auf den Montageträger 41 hinweisend eine Anlaufschräge aus. Diese gleitet beim Aufschieben des Positionierelements 43 auf dem Montageträger 41 an dessen Rastkante 41.5 vorbei und hebt dabei die Rastlasche 43.5 an. Nach dem Passieren der Rastkante 41.5 springt die federelastisch ausgebildete Rastlasche 43.5 wieder in ihre ursprüngliche Position zurück, sodass die Rastkante 41.5 in dem Stellweg der Rastnase 43.6 steht und dadurch den Stellbereich des Positionierelements 43 begrenzt. Nachdem das Klappenlager 40 an der Klappe, Faltklappe, Tür oder dergleichen befestigt und montiert ist, wird der Steuerarm 30 mit Hilfe des in Figur 5 gezeigten Achsbolzens 46 gelenkig mit den Achsbohrungen 42.5 des Lagerteils 42 verbunden.

Der Einstellvorgang des Klappenlagers 40 wird nachfolgend anhand der Figuren 7 bis 10 am Beispiel einer Faltklappe beschrieben. Dabei wird zunächst bei vollständig montierter Hebevorrichtung die Faltklappe geöffnet und die Einstellschraube 44 so weit aus dem Ansatz 42.10 herausgeschraubt, dass das Schraubenende 44.3 nicht mehr aus der Gewindebohrung 42.8 des Ansatzes 42.10 herausragt. Durch die von dem Steuerarm 30 auf das Lagerteil 42 übertragene Hebekraft wird das Lagerteil 42 entlang seines Stellweges mit seinem Ansatz 42.10 an den Anschlag 41.4 des Montageträgers 41 gedrückt. In dieser Position wird das Positionierelement 43 an das Lagerteil 42 herangeschoben, sodass es mit seiner zweiten Anlagefläche 43.3 an der ersten Anlagefläche 42.6 des Lagerteils 42 anliegt. Anschließend wird die Faltklappe geschlossen.

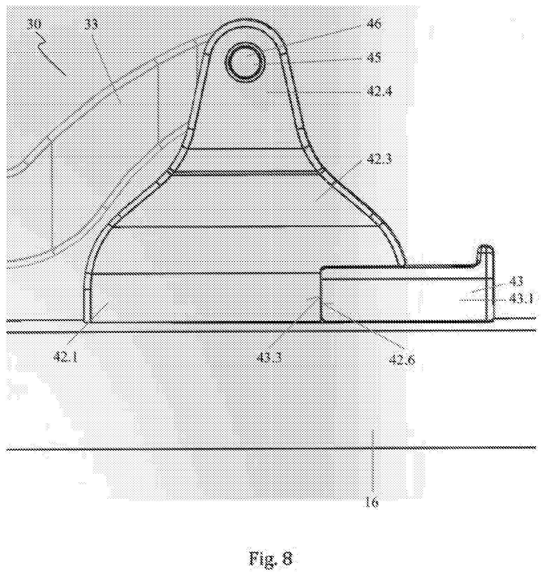

Figur 8 zeigt in einer Seitenansicht das in Figur 5 gezeigte, montierte Klappenlager 40 während eines ersten Verfahrensschritts zur Einstellung des Klappenlagers 40. Dazu wurde die Faltklappe derart geschlossen, sodass sie korrekt an dem Möbelkorpus anliegt. Die Position des Lagerteils 42, welches dieses bei an dem Anschlag 41.4 anliegendem Ansatz 42.10 einnimmt, entspricht einer Einstellung für einen kürzeren Steuerarm 30 als dem verwendeten. Durch die größere Länge des verwendeten Steuerarms 30 verstellt sich beim Schließen der Faltklappe das Lagerteil 42 des Klappenlagers 40 derart entlang seines Stellweges, dass sich der korrekte Abstand zwischen dem Schwenklager 45 am Klappenlager 40 und dem entsprechenden Lager des Steuerarms 30 an dem Klappenhalter 20 ergibt. Dabei stößt das Lagerteil 42 an das Positionierelement 43 an und verstellt dieses entlang des Stellwegs mit.

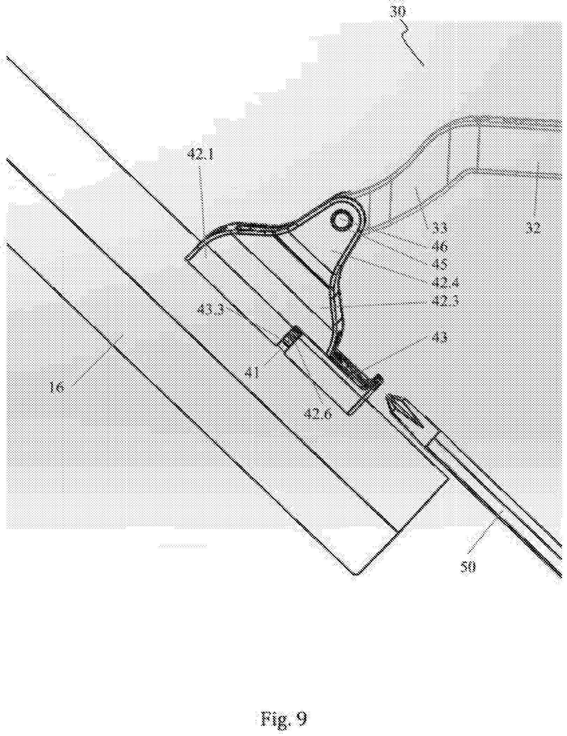

Figur 9 zeigt in einer perspektivischen Seitendarstellung das in Figur 8 gezeigte Klappenlager 40 während eines zweiten Verfahrensschritts zur Einstellung des Klappenlagers 40. Ausgehend von der in Figur 8 gezeigten Einstellsituation wurde die Faltklappe geöffnet, wie an dem im Winkel zu der zweiten Teilklappe 16 ausgerichteten Steuerarm 30 zu erkennen ist. Durch die von dem Steuerarm 30 auf das Klappenlager 40 übertragene Hebekraft des Klappenhalters 20 wurde beim Öffnen der Faltklappe das Lagerteil 42 entlang seines Stellwegs in Richtung der einwirkenden Hebekraft verstellt. Dabei wird der Stellbereich des Lagerteils 42 durch die Anlage seines Ansatzes 42.10 an den Anschlag 41.4 des Montageträgers 41 begrenzt. Das Positionierelement 43 ist so ausgelegt, dass es ohne eine über einem vorgegebenen Schwellwert liegende äußere Krafteinwirkung nicht in seiner Position verändert wird. Dazu ist durch entsprechende Auslegung der Führung 41.3 des Montageträgers 41 und der Nuten 43.2 des Positionierelements 43 eine ausreichend große Reibung zwischen den beiden Bauteilen ausgebildet. Das Positionierelement 43 kennzeichnet demnach die Position des Lagerteils 42 bei geschlossener Faltklappe. Es markiert somit die exakte Position des Lagerteils 42, in dem bei der vorliegenden Länge des Steuerarms 30 ein vollständiges Schließen der Faltklappe ermöglicht ist. Zur Einstellung der Position des Lagerteils 42 kann jetzt ein Werkzeug 50 durch die Werkzeugführung 43.7 am Positionierelement und die Werkzeugaufnahme 42.7 am Lagerteil zu der in Figur 7 gezeigten Einstellschraube 44 geführt werden. Durch Einschrauben der Einstellschraube 44 stützt sich diese, wie zu Figur 7 beschrieben, mit ihrem Schraubenende 44.3 an dem Anschlag 41.4 des Montageträgers 41 ab. Dadurch wird das Lagerteil 42 in Richtung zu dem Positionierelement 43 verschoben.

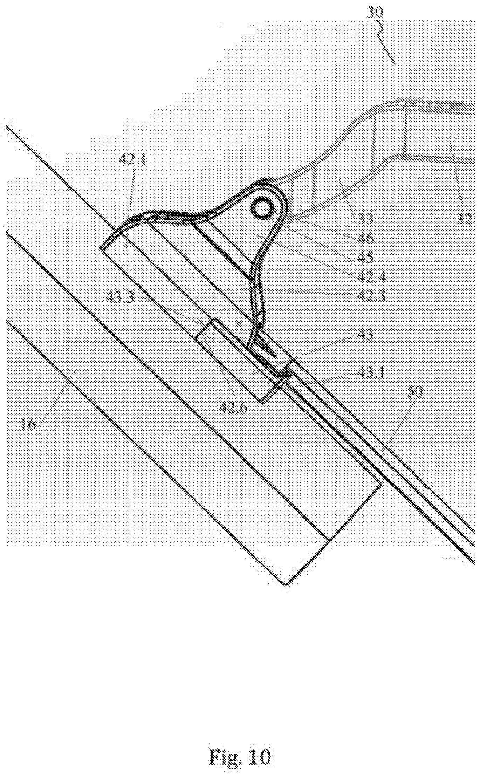

Figur 10 zeigt in einer perspektivischen Seitendarstellung das in Figur 9 gezeigte Klappenlager 40 nach Abschluss der Einstellung. Dabei ist das Werkzeug noch zu der Einstellschraube 44 geführt. Durch Einschrauben der Einstellschraube 44 ist das Lagerteil 42 bei geöffneter Faltklappe bis an das Positionierelement 43 herangeführt. Dabei ist das Lagerteil 42 nur so weit in Richtung zum Positionierelement 43 verschoben, dass dieses in seiner Position verbleibt. Das Lagerteil 42 liegt entsprechend leicht mit seiner ersten Anlagefläche 42.6 an der zweiten Anlagefläche 43.3 des Positionierelements 43 an. Das Lagerteil 42 befindet sich jetzt in der Position, die es auch bei geschlossener Faltklappe entsprechend Figur 8 eingenommen hat. Damit ist die Position des Lagerteils 42 optimal eingestellt, um ein vollständiges Schließen der Faltklappe zu ermöglichen. Durch die einwirkende Hebekraft wird das Lagerteil 42 mit dem Schraubenende 44.3 seiner Einstellschraube 44 gegen den Anschlag 41.4 des Montageträgers 41 gedrückt. Diese Hebekraft wirkt in allen teilgeöffneten Stellungen der Faltklappe, sodass das Lagerteil 42 in Kontakt mit dem Anschlag 41.4 gehalten ist und sich nicht in Richtung des Positionierelements 43 verstellt.

Vorteilhaft kann somit die Einstellung der Lage des Klappenlagers 40 in einem Einstellvorgang bei geöffneter Klappe, Faltklappe, Tür oder dergleichen erfolgen. Ein wiederholtes Öffnen und Schließen der Klappe, Faltklappe, Tür oder dergleichen zum Einstellen und jeweiligem Überprüfen der Position des Lagerteils 42 ist nicht erforderlich. Dadurch ist der Zeitbedarf zum Einstellen des Klappenlagers 40 deutlich reduziert. Dies gilt insbesondere, wenn an der Klappe, Faltklappe, Tür oder dergleichen zwei oder mehr Hebevorrichtungen vorgesehen sind, die jeweils separat eingestellt werden müssen, wobei die Schließbewegung einer einzelnen Hebevorrichtung durch die Einstellung der anderen Hebevorrichtungen beeinflusst wird. Durch den Einsatz des Klappenlagers 40 kann die optimale Position aller an einer Klappe, Faltklappe, Tür oder dergleichen vorgesehenen Klappenlager 40 durch einen einzigen Schließvorgang der Klappe, Faltklappe, Tür oder dergleichen ermittelt werden. Die Einstellung der Position der einzelnen Klappenlager 40 erfolgt dann bei geöffneter Klappe, Faltklappe, Tür oder dergleichen durch entsprechende Begrenzung der jeweiligen Stellbereiche der Lagerteile 42 in Richtung zu den Anschlägen 41.4 der Montageträger 41. Dabei wird die optimale Position der Lagerteil 42 jeweils separat ermittelt und eingestellt, wodurch jeweils vorliegende Montagetoleranzen ausgeglichen werden können.

Das Klappenlager 40 lässt sich vorteilhaft bei Steuerarmen 30 einsetzen, deren Länge in vorgegebenen Raststufen einstellbar ist. Die Raststufen sind bevorzugt durch einen gleich bleibenden Rastabstand zueinander beabstandet. Die Länge des Steuerarms 30 wird entsprechend der durch die Raststufen vorgegebenen Teilung auf die erforderliche Länge eingestellt und dann mit Hilfe einer Feststelleinrichtung blockiert. Ein solcher Steuerarm 30 kann somit für unterschiedlich große Möbelstücke 10 und unterschiedliche große Klappen, Faltklappen, Türen oder dergleichen verwendet werden. Er kann jedoch nur im Rahmen einer durch die Raststufen vorgegebenen Teilung auf die erforderliche Länge eingestellt werden, um ein vollständiges Schließen der Klappe, Faltklappe, Tür oder dergleichen zu ermöglichen. Die Feineinstellung erfolgt dann mit Hilfe des Klappenlagers 40. In einem ersten Einstellschritt wird somit zunächst die bestmögliche Länge des Steuerarms 30 ermittelt. Dabei wird bei geöffneter Feststelleinrichtung des Steuerarms 30 und maximalem Stellbereich des Lagerteils 42 des Klappenlagers 40 die Klappe, Faltklappe, Tür oder dergleichen geschlossen. Dabei stellt sich die Länge des Steuerarms 30 ein, wobei der Steuerarm 30 in einer Raststufe einrastet oder zwischen zwei Raststufen verbleibt. Anschließend wird die Klappe, Faltklappe, Tür oder dergleichen geöffnet. Dabei verbleibt der Steuerarm 30 in seiner eingerasteten Länge oder er wird bei Vorliegen einer Zwischenstellung in seine nächst kürzeren Rastposition verschoben. Die so ermittelte Länge des Rastarms 30 wird mittels seiner Feststelleinrichtung fixiert. Anschließend wird mit Hilfe des Positionierelements 43 und erneutem Schließen der Klappe, Faltklappe Tür oder dergleichen die exakte Position des Lagerteils 42 des Klappenlagers 40 ermittelt und eingestellt, wie dies zu den Figuren 8 bis10 beschrieben ist. Vorteilhaft entspricht der Stellbereich des Lagerteils 42 und/oder des Positionierelements 43 zumindest dem Rastabstand zwischen benachbarten Raststufen des Steuerarms 30. Der Stellbereich ist damit ausreichend groß, um eine Längenabweichung des Steuerarms 30 im Rahmen der Teilung seiner Rasterung ausgleichen zu können.

## Patentansprüche

1. Verfahren zur Einstellung eines Klappenlagers (40) mit einem Schwenklager (45) gegenüber einer Klappe, Faltklappe, Tür oder dergleichen eines Möbelstücks (10), wobei ein Montageträger (41) des Klappenlagers (40) an der Klappe, Faltklappe, Tür oder dergleichen befestigt ist, wobei ein Lagerteil (42) des Klappenlagers (40) das Schwenklager (45) trägt und entlang eines Stellweges verschiebbar an dem Montageträger (41) gelagert ist und wobei ein Steuerarm (30) mit dem Schwenklager (45) verbunden ist und eine schwenkbare Verbindung zwischen dem Klappenlager (40) und einem an einem Möbelkorpus des Möbelstücks (10) befestigten Klappenhalter (20) herstellt, wobei ein Positionierelement (43) verschiebbar an dem Montageträger (41) gelagert ist, und in einem Stellbereich des Lagerteils (42) entlang des Stellwegs des Lagerteils (42) angeordnet ist, **dadurch gekennzeichnet,**
**dass** die Klappe, Faltklappe, Tür oder dergleichen geschlossen wird, wobei das Lagerteil (42) an das Positionierelement (43) anstößt und es in eine Einstellposition verstellt, dass die Klappe, Faltklappe, Tür oder dergleichen geöffnet wird, wobei das Positionierelement (43) in seiner Position verbleibt, und dass der Stellweg des Lagerteils (42) in Richtung einer von dem Klappenhalter auf das Lagerteil übertragenen Haltekraft derart gegenüber dem Montageträger (41) eingestellt und begrenzt wird, dass das Lagerteil an dem Positionierelement (43) anliegt.

2. Verfahren nach Anspruch 1, **dadurch gekennzeichnet,**
**dass** ein in seiner Länge in vorgegebenen Rastschritten einstellbarer Steuerarm (30) verwendet ist, dass in einem ersten Verfahrensschritt die Klappe, Faltklappe, Tür oder dergleichen geschlossen wird, wobei sich eine Länge des Steuerarms (30) einstellt, dass die Klappe, Faltklappe, Tür oder dergleichen geöffnet wird, dass der Steuerarm (30) in seiner eingestellten Raststellung verbleibt oder bei nicht eingerasteter Rastverbindung in seiner nächst kürzeren Raststellung eingerastet wird, dass die Länge des Steuerarms (30) durch eine Feststelleinrichtung fixiert wird, dass das Positionierelement (43) an das Lagerteil (42) herangeschoben wird, dass die Klappe, Faltklappe, Tür oder dergleichen ein weiteres Mal geschlossen wird, wobei das Lagerteil (42) an das Positionierelement (43) anstößt und es in eine Einstellposition verstellt, dass die Klappe, Faltklappe, Tür oder dergleichen geöffnet wird, wobei das Positionierelement (43) in seiner Position verbleibt, und dass der Stellweg des Lagerteils (42) in Richtung einer von dem Klappenhalter auf das Lagerteil übertragenen Haltekraft derart gegenüber dem Montageträger (41) eingestellt und begrenzt wird, dass das Lagerteil an dem Positionierelement (43) anliegt.

3. Verfahren nach Anspruch 1 oder 2, **dadurch gekennzeichnet,**
**dass** die Stellrichtungen des Positionierelements (43) und des Lagerteils (42) gleich ausgerichtet sind.

4. Verfahren nach einem der Ansprüche 1 bis 3, **dadurch gekennzeichnet, dass** der Montageträger (41) eine Führung aufweist, und dass das Lagerteil (42) und das Positionierelement (43) auf der Führung gelagert sind.

5. Verfahren nach einem der Ansprüche 1 bis 4, **dadurch gekennzeichnet, dass** das Lagerteil (42) und/oder das Positionierelement (43) auf einer linearen Bahn oder einer gekrümmten Bahn oder einer Kreisbahn geführt sind.

6. Verfahren nach einem der Ansprüche 1 bis 5, **dadurch gekennzeichnet, dass** das Positionierelement (43) derart an dem Montageträger (41) gelagert ist, dass es ohne äußere, über einem vorgegebenen Schwellwert liegende Krafteinwirkung in seiner jeweiligen Position gegenüber dem Montageträger (41) gehalten ist.

7. Verfahren nach einem der Ansprüche 1 bis 6, **dadurch gekennzeichnet, dass** an dem Montageträger (41) ein Anschlag (41.4) angeordnet ist, der den Stellweg des Lagerteils (42) in Richtung einer von der Hebevorrichtung auf das Klappenlager (40) übertragenen Hebekraft begrenzt, und dass an dem Lagerteil (42) ein Einstellmittel, insbesondere eine Einstellschraube (44), angeordnet ist, mit welcher der Stellbereich des Lagerteils (42) in Richtung zum Anschlag (41.4) einstellbar ist.

8. Verfahren nach einem der Ansprüche 1 bis 7, **dadurch gekennzeichnet, dass** das Positionierelement (43) entgegengesetzt zu der Richtung der von der Hebevorrichtung auf das Klappenlager (40) übertragenen Hebekraft in den Stellbereich des Lagerteils (42) entlang des Stellwegs angeordnet ist.

9. Verfahren nach einem der Ansprüche 1 bis 8, **dadurch gekennzeichnet, dass** der Stellbereich des Positionierelements (43) entgegengesetzt zu der Richtung der von der Hebevorrichtung auf das Klappenlager (40) übertragenen Hebekraft durch eine Rastverbindung zwischen dem Positionierelement (43) und dem Montageträger (41) begrenzt ist.

10. Verfahren nach einem der Ansprüche 2 bis 9, **dadurch gekennzeichnet,**
**dass** die Länge des Steuerarms (30) in vorgegebenen Rastschritten einstellbar ist.

11. Verfahren nach Anspruch 10, **dadurch gekennzeichnet, dass** die Länge des Steuerarms (30) durch eine Feststelleinrichtung fixierbar ist.

12. Verfahren nach einem der Ansprüche 10 oder 11,
**dadurch gekennzeichnet,**
**dass** aufeinanderfolgende Raststellungen des Steuerarms (30) in jeweils dem gleichen Rastabstand zueinander angeordnet sind und dass der maximale Stellweg des Lagerteils (42) und/oder des Positionierelements (43) größer oder gleich dem Rastabstand ist.

## Claims

1. A method for adjusting a flap bearing (40) having a pivot bearing (45) relative to a flap, folding flap, door, or the like of an item of furniture (10), an installation support (41) of the flap bearing (40) being fastened to the flap, folding flap, door, or the like, a bearing part (42) of the flap bearing (40) supporting the pivot bearing (45) and being supported on the installation support (41) for displacing along a displacement path, and a control arm (30) being connected to the pivot bearing (45) and producing a pivoting connection between the flap bearing (40) and a flap holder (10) fastened to a furniture frame of the item of furniture (20), wherein a positioning element (43) is displaceably supported on the installation support (42) and disposed in a displacement range of the bearing part (42) along the displacement path of the bearing part (42);
**characterized in that** the flap, folding flap, door, or the like is closed, wherein the bearing part (42) strikes the positioning element (43) and displaces the same into a setting position; that the flap, folding flap, door, or the like is opened, wherein the positioning element (43) remains in position; and that the displacement path of the bearing part (42) in the direction of a retaining force transmitted from the flap holder to the bearing part is adjusted and limited relative to the installation support (41) such that the bearing part bears against the positioning element (43).

2. The method according to claim 1,
**characterized in that** a control arm (30) adjustable in length at specified detent increments is used; that in a first method step the flap, folding flap, door, or the like is closed, wherein a length of the control arm (30) is adjusted; that the flap, front flap, door, or the like is opened; that the control arm (30) remains in the set detent setting thereof or is detented at the next shortest detent setting if the detent connection is not detented; that the length of the control arm (30) is fixed by means of a locking device; that the positioning element (43) is pressed against the bearing part (42); that the flap, folding flap, door, or the like is closed once again, wherein the bearing part (42) strikes the positioning element (43) and displaces the same into a setting position; that the flap, folding flap, door, or the like is opened, wherein the positioning element (43) remains in position; and that the displacement path of the bearing part (42) in the direction of a retaining force transmitted from the flap holder to the bearing part is adjusted and limited relative to the installation support (41) such that the bearing part bears against the positioning element (43).

3. The method according to claim 1 or 2,
**characterized in that** the displacement directions of the positioning element (43) and the bearing part (42) are identically oriented.

4. The method according to any one of the claims 1 through 3,
**characterized in that** the installation support (41) comprises a guide, and that the bearing part (42) and the positioning element (43) are supported on the guide.

5. The method according to any one of the claims 1 through 4,
**characterized in that** the bearing part (42) and/or the positioning element (43) are guided on a linear path or a curved path or a circular path.

6. The method according to any one of the claims 1 through 5,
**characterized in that** the positioning element (43) is supported on the installation support (41) such that said element is held in position relative to the installation support (41) without external force above a specified threshold value being applied.

7. The method according to any one of the claims 1 through 6,
**characterized in that** a stop (41) is disposed on the installation support (41.4) and limits the displacement path of the bearing part (42) in the direction of a lifting force transmitted from the lifting device to the flap bearing (40), and that an adjusting means, particularly an adjustment screw (42) is disposed on the bearing part (44), by means of which the displacement range of the bearing part (42) in the direction toward the stop (41.4) can be adjusted.

8. The method according to any one of the claims 1 through 7,
**characterized in that** the positioning element (43) is disposed along the displacement path in the opposite direction as the lifting force transmitted from the lifting device to the flap bearing (40) into the displacement range of the bearing part (42).

9. The method according to any one of the claims 1 through 8,
**characterized in that** the displacement range of the positioning element (43) is limited by a latching connection between the positioning element (43) and the installation support (41) in the direction opposite the lifting force transmitted from the lifting device to the flap bearing (40).

10. The method according to any one of the claims 2 through 9,
**characterized in that** the length of the control arm (30) is adjustable in specified detent increments.

11. The method according to claim 10,
**characterized in that** the length of the control arm (30) can be fixed by a locking device.

12. The method according to claim 10 or 11,
**characterized in that** successive detent settings of the control arm (30) are each disposed at the same detent spacing to each other, and that the maximum displacement path of the bearing part (42) and/or of the positioning element (43) is greater than or equal to the detent spacing.

## Revendications

1. Méthode de réglage d'un palier de volet (40) avec un palier de pivotement (45) par rapport à un volet, un volet pliant, une porte ou similaire d'un meuble (10), dans laquelle un support de montage (41) du palier de volet (40) est fixé au volet, au volet pliant, à la porte ou similaire, une partie de palier (42) du palier de volet (40) portant le palier de pivotement (45) et étant montée sur le support de montage (41) de manière à pouvoir coulisser le long d'une course de réglage, et un bras de commande (30) étant relié au palier de pivotement (45) et établissant une liaison pivotante entre le palier de volet (40) et un support de volet (20) fixé sur un corps de meuble du meuble (10), un élément de positionnement (43) étant monté de manière à pouvoir coulisser sur le support de montage (41), et est disposé dans une zone de positionnement de la partie de palier (42) le long de la course de positionnement de la partie de palier (42),
**caractérisée en ce que** le volet, le volet pliant, la porte ou similaire est fermé, la partie de palier (42) venant en butée contre l'élément de positionnement (43) et le déplaçant dans une position de réglage, **en ce que** le volet, le volet pliant, porte ou similaire s'ouvre, l'élément de positionnement (43) restant dans sa position, et **en ce que** la course de réglage de la partie de palier (42) en direction d'une force de maintien transmise par le support de volet à la partie de palier est réglée et limitée par rapport au support de montage (41) de telle sorte que la partie de palier s'applique contre l'élément de positionnement (43).

2. Méthode selon la revendication 1,
**caractérisée en ce qu'**on utilise un bras de commande (30) dont la longueur est réglable par pas d'encliquetage prédéfinis, **en ce que** dans une première étape de la méthode, le volet, le volet pliant, la porte ou similaire est fermé, une longueur du bras de commande (30) se réglant, **en ce que** le volet, le volet pliant, la porte ou similaire est ouvert, **en ce que** le bras de commande (30) reste dans sa position d'encliquetage réglée ou, si la liaison par encliquetage n'est pas encliquetée, est encliqueté dans sa position d'encliquetage suivante la plus courte, **en ce que** la longueur du bras de commande (30) est fixée par un dispositif de blocage, **en ce que** l'élément de positionnement (43) est poussé contre la partie de palier (42), **en ce que** le volet, le volet pliant, la porte ou similaire est fermé une autre fois, la partie de palier (42) venant buter contre l'élément de positionnement (43) et le déplaçant dans une position de réglage, **en ce que** le volet, le volet pliant, la porte ou similaire est ouvert, l'élément de positionnement (43) restant dans sa position, et **en ce que** la course de réglage de la partie de palier (42) dans le sens d'une force de maintien transmise par le support de volet à la partie de palier est réglée et limitée par rapport au support de montage (41) de telle sorte que la partie de palier s'applique contre l'élément de positionnement (43).

3. Méthode selon la revendication 1 ou 2,
**caractérisée en ce que** les directions de positionnement de l'élément de positionnement (43) et de la partie de palier (42) sont orientées dans le même sens.

4. Méthode selon l'une des revendications 1 à 3,
**caractérisée en ce que** le support de montage (41) comporte un guide, et **en ce que** la partie de palier (42) et l'élément de positionnement (43) sont montés sur le guide.

5. Méthode selon l'une des revendications 1 à 4,
**caractérisée en ce que** la partie de palier (42) et/ou l'élément de positionnement (43) sont guidés sur une trajectoire linéaire ou sur une trajectoire courbe ou sur une trajectoire circulaire.

6. Méthode selon l'une des revendications 1 à 5,
**caractérisée en ce que** l'élément de positionnement (43) est monté sur le support de montage (41) de manière à être maintenu dans sa position respective par rapport au support de montage (41) sans application d'une force extérieure supérieure à une valeur seuil prédéterminée.

7. Méthode selon l'une des revendications 1 à 6,
**caractérisée en ce que** sur le support de montage (41) est disposée une butée (41.4) qui limite la course de réglage de la partie de palier (42) en direction d'une force de levage transmise par le dispositif de levage au palier de volet (40), et **en ce que** sur la partie de palier (42) est disposé un moyen de réglage, notamment une vis de réglage (44), qui permet de régler la plage de réglage de la partie de palier (42) en direction de la butée (41.4).

8. Méthode selon l'une des revendications 1 à 7,
**caractérisée en ce que** l'élément de positionnement (43) est disposé à l'opposé de la direction de la force de levage transmise par le dispositif de levage au palier de volet (40) dans la zone de réglage de la partie de palier (42) le long de la course de réglage.

9. Méthode selon l'une des revendications 1 à 8,
**caractérisée en ce que** la zone de positionnement de l'élément de positionnement (43), opposée à la direction de l'effort de levage transmis par le dispositif de levage au palier de volet (40), est délimitée par une liaison par encliquetage entre l'élément de positionnement (43) et le support de montage (41).

10. Méthode selon l'une des revendications 2 à 9,
**caractérisée en ce que** la longueur du bras de commande (30) est réglable par pas d'encliquetage prédéterminés.

11. Méthode selon la revendication 10,
**caractérisée en ce que** la longueur du bras de commande (30) peut être fixée par un dispositif de blocage.

12. Méthode selon l'une des revendications 10 ou 11,
**caractérisée en ce que** des positions d'encliquetage successives du bras de commande (30) sont disposées chacune à la même distance d'encliquetage l'une de l'autre et **en ce que** la course de réglage maximale de la partie de palier (42) et/ou de l'élément de positionnement (43) est supérieure ou égale à la distance d'encliquetage.
